Europäisches Patentamt

European Patent Office

Office européen des brevets

(19)

(11) Publication number: **0 115 538**
**A1**

# EUROPEAN PATENT APPLICATION

published in accordance with Art. 158(3) EPC

(21) Application number: 83902294.4

(22) Date of filing: 26.07.83

Data of the international application taken as a basis:

(86) International application number:
PCT/JP 83/00240

(87) International publication number:
WO 84/00647 (16.02.84 84/5)

(51) Int. Cl.³: **H 02 K 11/00**, G 01 P 1/04,
G 01 P 3/44

(30) Priority: 27.07.82 JP 129644/82

(43) Date of publication of application: 15.08.84
Bulletin 84/33

(84) Designated Contracting States: DE FR GB

(71) Applicant: FANUC LTD, 5-1, Asahigaoka 3-chome
Hino-shi, Tokyo 191 (JP)

(72) Inventor: KAWADA, Shigeki, 346-15, Shimoda Hino-shi,
Tokyo 191 (JP)
Inventor: AMEMIYA, Yoichi, 1019-357, Nishiterakata-cho
Hachioji-shi, Tokyo 192-01 (JP)
Inventor: SOGABE, Masatoyo, 5-20-6, Sanda-cho
Hachioji-shi, Tokyo 193 (JP)
Inventor: IWAMATSU, Noboru, 3-27, Tamadaira Hino-shi,
Tokyo 191 (JP)
Inventor: OKUDA, Kanemasa, 3-27, Tamadaira Hino-shi,
Tokyo 191 (JP)

(74) Representative: Allman, Peter John, Marks and Clerk
Scottish Life House Bridge Street, Manchester M3 3DP
(GB)

(54) **DEVICE FOR COUPLING SERVO MOTOR TO ROTARY DETECTOR.**

(57) In a device for coupling a servo motor (10) which has a motor housing (12) and an output shaft (20) rotatably supported by the housing, to a rotary detector (32) which has a detector housing (34) and an input shaft (36) rotatably supported by the housing (34), the output shaft and the input shaft are rigidly clamped coaxially by a shaft clamping bolt (56). The motor housing and the detector housing are coupled by an annular leaf spring (64) extending around the circumferences thereof, concentrically with the output and input shafts. The spring is attached by a plurality of housing clamping bolts (66) to both of the motor and detector housings, thereby allowing a relative axial displacement of the motor and detector housings while suppressing any relative rotational displacement.

DESCRIPTION

TECHNICAL FIELD

The present invention relates to a coupling device for interconnecting a servomotor and a rotation detector for detecting the rotary output of the servomotor.

BACKGROUND ART

At present, servomotors and rotation detectors are widely used for the servocontrol of machine tools and industrial robots. In a machine tool, for example, a servomotor is employed as a rotative driving source to drive the work table, and a rotation detector such as a rotary encoder is connected through coupling means to the servomotor to detect the rotary output of the servomotor, to index the work table.

Recently, the need has arisen for further improvements in the precision control of machine tools and industrial robots. To meet this need, various improvements in the accuracy of servomotors and rotation detectors, such as a rotary encoder, have been introduced. However, to attain a precise servocontrol through the combination of the servomotor and the rotation detector, the servomotor and the rotation detector need to be interconnected in a manner which will not cause errors in the rotation transmission and will ensure a highly rigid connection.

Coventionally, the servomotor and the rotation detector are interconnected by coupling means such as a flexible coupling or an Oldham's coupling. However, the flexible coupling in general has insufficient rigidity and is likely to be damaged by the continuous stress caused by the absorption of the axial misalignment between the servomotor and the rotation detector. On the other hand, the Oldham's coupling is likely to contain play within the rotation transmitting passage thereof, and hence the rotation transmitting accuracy of the Oldham's coupling is limited.

Accordingly, it is an object of the present invention to provide a coupling device for interconnecting the servomotor and the rotation detector, which coupling device is capable of eliminating the disadvantages of the conventional coupling device for interconnecting the servomotor and the rotation detector, allowing the accurate detection of the rotatory output of the servomotor by the rotation detector, and improving the rigidity of the rotatory connection between the servomotor and the rotation detector.

## DISCLOSURE OF THE INVENTION

According to the present invention, a coupling device for interconnecting a servomotor having a motor housing and an output shaft journaled on the motor housing and a rotation detector having a detector housing, an input shaft journaled on the detector housing, and a detecting unit for detecting the rotation of the input shaft relative to the detector housing, comprises shaft coupling means to firmly fasten the output shaft and the input shaft in a coaxial state, and housing joining means to join the motor housing and the detector housing. The housing joining means comprises an annular spring plate extending along a circumference concentric with the output shaft and the input shaft, and a plurality of housing fastening bolts. The spring plate is secured to both the motor housing and the detector housing with the housing fastening bolts, so that a relative axial displacement between the motor housing and the detector housing is allowed, whereas the relative torsional displacement between the motor housing and the detector housing is restrained. Since the relative torsional displacement between the motor housing and the detector housing is restrained by the spring plate, the rotation transmitting accuracy will not be deteriorated. Since the spring plate allows a relative axial displacement between the motor housing and the detector housing, the axial dimensional tolerances can be smoothly absorbed when fastening the output shaft and the input shaft together. Furthermore, the spring plate also absorbs the axial displacements of the output shaft and the input shaft resulting from heat generated by the servomotor. Therefore, the servomotor or the rotation detector is not exposed to excessive or injurious stress.

The above and other objects and features of the present invention will become more apparent from the following detailed description, made with reference to the accompanying drawings.

BRIEF DESCRIPTION OF THE DRAWINGS

Figure 1 is a sectional view of a preferred embodiment of a coupling device for interconnecting a servomotor and a rotation detector, according to the present invention;

Fig. 2 is an enlarged partial sectional view of the device shown in Fig. 1; and

Fig. 3 is a front elevation view of a spring plate employed in the device shown in Fig. 1.

BEST MODE FOR CARRYING OUT THE INVENTION

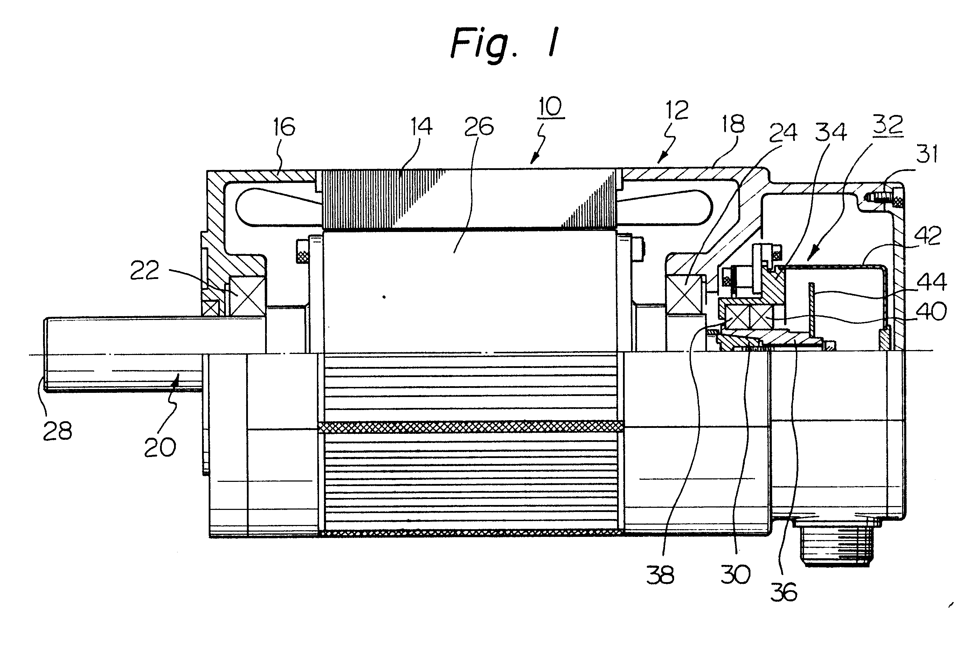

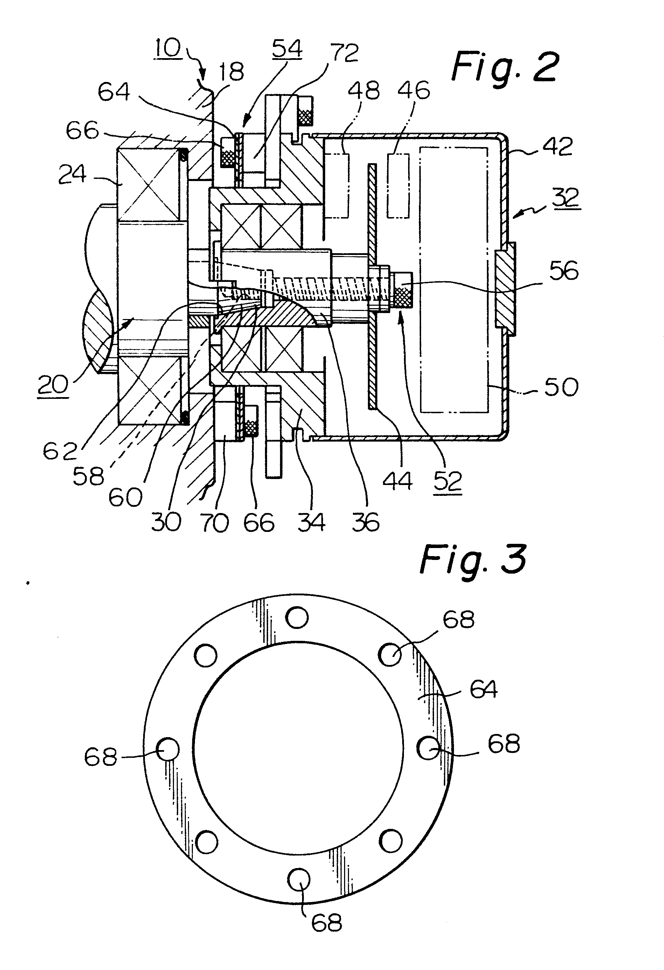

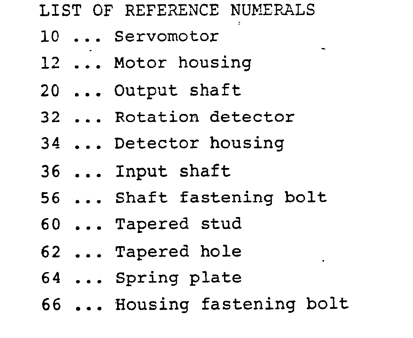

Referring to Figs. 1 and 2, which show a preferred embodiment of the present invention, a servomotor 10 has a motor housing indicated generally at 12. In this embodiment, the motor housing 12 consists of a front motor casing 16 disposed at the front end of a stator 14, and a rear motor casing 18 disposed at the rear end of the stator 14. The casings 16 and 18 and the stator 14 are fastened together with screw bolts, not shown, penetrating therethrough. An output shaft 20 is rotatably supported on the casings 16 and 18 by means of antifriction bearings 22 and 24. A rotor 26 is fixed to the output shaft 20 in such a manner as to be disposed between the casings 16 and 18. The front end 28 of the output shaft 20 is extended frontward from the front casing 16. The rear end 30 of the output shaft 20 is extended rearward from the bearing 24 provided in the rear motor casing 18.

A rotary encoder, i.e., a rotation detector, is indicated generally at 32. The rotary encoder 32 has a detector housing 34. An input shaft 36 is rotatably supported on the detector housing 34 by means of antifriction bearings 38 and 40. The rear motor casing 18 is provided with a protective cover 31 enclosing the rotation detector 32.

The detector housing 34 is provided at the rear part thereof with a cover 42. Within the cover 42, a rotary plate 44 is fixed to the rear end of the input shaft 36, coaxially with the input shaft 36. As shown in Fig. 2, the angle of rotation of the rotary plate 44 is detected by detecting heads 46 and 48. A detection signal given by the detecting heads is sent to a detection control unit 50 (see Fig. 2) and is transmitted further from the detection control unit 50 through a signal line, not shown. The detecting heads 46 and 48 and the detection control unit 50 are fixed to the detector housing 34.

A coupling device for interconnecting the servomotor 10 and the rotary encoder 32 will be described hereinafter. In this embodiment, the coupling device comprises shaft coupling means 52 for firmly and coaxially fastening the output shaft 20 and the input shaft 36 together, and housing joining means 54 for joining the rear motor casing 18 of the motor housing 12 and the detector housing 34.

The shaft coupling means 52 has a shaft fastening bolt 56, which penetrates axially the central part of the input shaft 36. The free end of the shaft fastening bolt 56 is screwed in a threaded hole 58 formed in the rear end 30 of the output shaft 20. A male-and-female junction is formed at the contiguous ends of the output shaft 20 and the input shaft 36, respectively.

In this embodiment, the male-and-female junction consists of a stud 60 tapered to a truncated cone and a hole 62 tapered to a truncated cone, to snugly receive the tapered stud therein. The tapered stud 60 is formed at the rear end 30 of the output shaft 20 coaxially therewith, while the tapered hole 62 is formed at the front end of the input shaft 36 coaxially therewith. Accordingly, the input shaft 36 is fastened tightly to the output shaft 20 with the tapered hole 62 snugly receiving the tapered stud 60 therein by screwing the shaft fastening bolt 56 in the threaded hole 58.

The housing joining means 54 has an annular spring plate or plates 64 extending along a circumference concentric with the output shaft 20 and the input shaft 36 and a plurality of housing fastening bolts 66. The spring plates 64 are disposed so that the opposite end surfaces thereof are perpendicular to the axes of the output shaft 20 and the input shaft 36. Each spring plate 64 is made of a resilient plate material such as a spring steel plate. As shown in Fig. 3, a plurality of bolt holes 68 for receiving the housing fastening bolts 66 therethrough are formed in the spring plates 64 along the circumference thereof at equal circumferential intervals. Preferably, the inner diameter of the bolt hole 68 is slightly larger than the outer diameter of the housing fastening bolts 66, which provides an adjusting allowance for positioning the detector housing 34 relative to the rear motor casing 18, thereby facilitating the assembly of the servomotor 10 and the rotation detector 32.

A plurality of threaded holes, not shown, are formed in the rear motor casing 18 and the detector housing 34. The housing fastening bolts 66 can be threadedly engaged in the threaded holes 74 and 76. Spacers 70 and 72 are interposed between the rear motor casing 18 and the spring plates 64, and between the detector housing 34 and the spring plates 64 respectively, each receiving the housing fastening bolt 66 therethrough.  The spring plates 64 are fastened to the spacers 70 and 72 adjoining the rear motor casing 18 and the detector housing 34, respectively, by the housing fastening bolts 66, so that the relative axial displacement between the rear motor casing 18 of the motor housing 12 and the detector housing 34 is allowed, whereas the relative torsional displacement between them is restrained.

Preferably, the housing fastening bolts 66 screwed into the rear motor casing 18, and the housing fastening bolts 66 screwed into the detector housing 34, are inserted alternately through the bolt holes 68 of the spring plates 64.

Since the relative axial displacement between the rear motor casing 18 of the motor housing 12 and the detector housing 34 is allowed, the dimensional tolerance of the junction between the output shaft 20 and the input shaft 36 is absorbed by the spring plates 64. Nevertheless, since the spring plates 64 restrain the relative torsional displacement between the rear motor casing 18 and the detector housing 34, the rotation of the output shaft 20 is transmitted to the input shaft 36 without error.

Where thermal expansion of the output shaft 20 and the input shaft 36 occurs due to the heat generated by the operation of the servomotor 10 or the heat transmitted thereto through a driven unit connected to the front end 28 of the output shaft 20, the axial displacements of the output shaft 20 and the input shaft 36 are absorbed between the rear motor casing 18 and the detector housing 34 by the spring plates 64.  Therefore, junctions between the output shaft 20 and the input shaft 36 and between the rear motor casing 18 and the detector housing 34 are not exposed to excessive stress, which obviates the reduction in strength of those junctions. Furthermore, under such a thermal expansion, since the spring plates 64 restrain the relative torsional displacement between the rear motor casing 18 and the detector housing 34, no rotation detecting error results from the thermal expansion.

Either only one spring plate 64 or an appropriate number of spring plates 64 may be provided, depending on the operating condition.

In the above-mentioned embodiment, since the male -and-female junction consists of the tapered stud 60 and the corresponding tapered hole 62, the output shaft 20 and the input shaft 36 can be easily aligned. Although not shown in the drawing, the same effect is provided when the tapered stud is formed in the input shaft 36 and the tapered hole is formed in the output shaft 20. The object of the present invention is attainable even when the male-and-female junction consists of a straight stud of a uniform diameter and the corresponding cylindrical hole of a uniform inner diameter, instead of the tapered stud and the tapered hole.

Furthermore, instead of providing spacers between the spring plates 64 and the motor housing 12, and between the spring plates 64 and the detector housing 34, bosses may be formed in the motor housing 12 and the detector housing 34.

The rotation detector is not limited to a rotary encoder, but a resolver or a differential transformer, for instance, may be employed.

CAPABIRITY OF EXPLOITATION IN INDUSTRY

As is apparent from the above description, according to the present invention, precision control of a servomotor is attained and, since the strength of the junction between a servomotor and a rotation detector is improved, the present invention can be effectively applied to the precision servocontrol systems for machine tools and industrial robots.

## CLAIMS

1. A coupling device for interconnecting a servomotor having a motor housing and an output shaft rotatably supported in the motor housing and a rotation detector having a detector housing and an input shaft rotatably supported in the detector housing, comprising shaft coupling means to fasten together the output shaft and the input shaft in a coaxial state; housing joining means to join the motor housing and the detector housing; said housing joining means comprising annular spring plates extending along a circumference which is concentric with said output shaft and said input shaft and a plurality of housing fastening bolts; and said spring plate is fixed both to said motor housing and to said detector housing by means of said housing fastening bolts in such a manner as to allow the relative axial displacement between said motor housing and said detector housing and to restrain the relative torsional displacement between said motor housing and said detector housing.

2. A coupling device according to Claim 1, wherein said shaft coupling means comprises shaft fastening bolts penetrating axially through the input shaft and screwed into said output shaft; and a male-and-female junction formed at the contiguous ends of said output shaft and said input shaft, respectively.

3. A coupling device according to Claim 2, wherein said male-and-female junction consists of a stud tapered to a truncated cone and a hole tapered to a truncated cone snugly receiving said tapered stud.

4. A coupling device according to Claim 2, wherein said maleand-female junction consists of a straight stud and a cylindrical hole.

5. A coupling device according to Claim 1, wherein said spring plates have a plurality of bolt holes penetrating through the opposite end surfaces thereof, and the housing fastening bolts screwed in said motor housing and the housing fastening bolts screwed in said detector housing are inserted alternately through said bolt holes.

6. A coupling device according to Claim 5, wherein the inside diameter of the bolt holes formed in the spring plate is larger than the outside diameter of the housing fastening bolts.

7. A coupling device according to Claim 1, wherein said rotation detector is a rotary encoder.

# Fig. 1

- 3 -

0115538

LIST OF REFERENCE NUMERALS

10 ... Servomotor

12 ... Motor housing

20 ... Output shaft

32 ... Rotation detector

34 ... Detector housing

36 ... Input shaft

56 ... Shaft fastening bolt

60 ... Tapered stud

62 ... Tapered hole

64 ... Spring plate

66 ... Housing fastening bolt

# INTERNATIONAL SEARCH REPORT

International Application No. PCT/JP83/00240

**I. CLASSIFICATION OF SUBJECT MATTER** (if several classification symbols apply, indicate all) [3]

0115538

According to International Patent Classification (IPC) or to both National Classification and IPC

Int. Cl.[3] H02K 11/00, G01P 1/04, G01P 3/44

**II. FIELDS SEARCHED**

| Minimum Documentation Searched [4] | |
|---|---|
| Classification System | Classification Symbols |
| I P C | H02K 11/00, G01P 1/04, G01P 3/44 |

| | Documentation Searched other than Minimum Documentation to the Extent that such Documents are Included in the Fields Searched [5] | |
|---|---|---|
| | Jitsuyo Shinan Koho | 1926 - 1983 |
| | Kokai Jitsuyo Shinan Koho | 1971 - 1983 |

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| X | US,A, 3328977 (Ford Motor Company) 4. July. 1967 (4. 7. 67) Column 2, line 61 to column 3, line 49, Figs. 1 to 3 | 1 - 4 |
| X | JP,U, 49-80281 (Hitachi, Ltd.) 27. October. 1972 (27. 10. 72) Columns 1 to 2, Figs. 1 to 4 | 1 - 4 |
| A | JP,A, 47-4142 (V.D.O. Tachometer Werke Adolf Sintoring GmbH) 29. February. 1972 (29. 2. 72) Column 7, line 10 to column 8, line 19, Figs. 1 to 2 | 1, 6 |
| X | JP,A, 55-56449 (Nihon Denshi Kabushiki Kaisha) 6. December. 1974 (6. 12. 74) Column 3, lines 2 to 20, Fig. 1 | 7 |
| A | JP,A, 47-342 (The Bendix Corp.) 10. January. 1972 (10. 1. 72) Column 5, line 17 to column 7, line 13 | 1 |
| A | JP,A, 49-127671 (Robert Bosch GmbH) 6. December. 1974 (6. 12. 74) Column 16, line 9 to column 19, line 16, Fig. 6 & US,A, 3952220 & GB,A, 1464659 & DE,A, 2312547 & FR,A, 2221733 & IT,A, 1011056 | 1 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| October 12, 1983 (12.10.83) | October 31, 1983 (31.10.83) |

| International Searching Authority [1] | Signature of Authorized Officer [20] |
|---|---|
| Japanese Patent Office | |

Form PCT/ISA/210 (second sheet) (October 1981)